# EUROPÄISCHE PATENTSCHRIFT

(11) **EP 0 640 516 B1**
(45) Veröffentlichungstag und Bekanntmachung des Hinweises auf die Patenterteilung: **06.11.1996**
(21) Anmeldenummer: 94112345.7
(22) Anmeldetag: 05.08.1994
(51) Int. Cl.: B60R 22/18, B60R 22/46

(54) **Einrichtung zur Befestigung einer allgemein zylindrischen Gasgeneratorpatrone in einer Gurtstraffer-Antriebseinheit**
Device for fastening a generally cylindrical gas generator cartridge in a belt tensioner drive unit
Dispositif pour fixer une cartouche de générateur de gaz de forme essentiellement cylindrique dans une unité d'entraînement de tendeur de ceinture de sécurité

(30) Priorität: 26.08.1993 DE 4328760
(43) Veröffentlichungstag der Anmeldung: 01.03.1995
(73) Patentinhaber: TRW Occupant Restraint Systems GmbH, 73553 Alfdorf (DE)
(72) Erfinder: Schmid, Johannes, D-73527 Schwäbisch Gmünd (DE)
(74) Vertreter: Degwert, Hartmut, Dipl.-Phys.

(56) Entgegenhaltungen:
- EP-A- 0 059 643
- EP-A- 0 168 588
- EP-A- 0 180 488
- DE-U- 8 621 257
- DE-U- 8 914 030
- US-A- 3 942 819

## Beschreibung

Die Erfindung betrifft eine Einrichtung zur Befestigung einer allgemein zylindrischen Gasgeneratorpatrone in einer Gurtstraffer-Antriebseinheit eines Rückhaltesystems für Fahrzeuge, wobei die Gasgeneratorpatrone in eine Bohrung in einem Gehäuseblock der Antriebseinheit eingeschoben und in dieser festgelegt wird und wobei die Gasgeneratorpatrone an ihrem dem Boden der Bohrung zugewandten inneren Ende einen Gasauslaß aufweist und an ihrem gegenüberliegenden äußeren Ende mit einem Zünder versehen ist. (Siehe z.B. DE-U-8 621 257 oder EP-A-0 168 588).

Gasgeneratorpatronen für Gurtstraffer-Antriebseinheiten in Rückhaltesystemen für Fahrzeuge haben ein allgemein zylindrisches Gehäuse mit einem länglichen Hauptkörper, worin die Treibladung untergebracht ist, und einem verbreiterten Kopfstück, das mit einem elektrischen Zünder und elektrischen Kontaktstiften für eine Steckverbindung mit einem Anschlußstecker versehen ist. Da Gehäuseform und -abmessungen der Gasgeneratorpatrone weitgehend standardisiert sind, muß sich die Einrichtung zur Befestigung der Gasgeneratorpatrone in einem Gehäuseblock der Gurtstraffer-Antriebseinheit an diesen Gegebenheiten orientieren.

Aus offensichtlichen Gründen der Sicherheit ist die Montage der Gasgeneratorpatrone einer der letzten Schritte bei der Herstellung der Gurtstraffer-Antriebseinheit. Die Anforderungen an die Befestigung der Gasgeneratorpatrone im Gehäuseblock der Antriebseinheit sind sehr hoch, da sie im Moment der Zündung des Gasgenerators extrem hohen Axialkräften standhalten muß. Aus diesen Gründen wurden bisher nur die Vernietung des Gehäuses der Gasgeneratorpatrone oder eine Steckverbindung mit Klammer und einem Einstich im Gehäuse der Gasgeneratorpatrone praktiziert. Das Nietverfahren wurde gegenüber der zu aufwendigen Steckverbindung bevorzugt. Voraussetzung für die Anwendung des Nietverfahrens ist aber, daß das Gehäuse der Gasgeneratorpatrone aus einem nietfähigen Material besteht. Die fertigungstechnisch und aus Kostengründen vorteilhafte Verwendung von Werkstoffen wie Aluminium-Magnesium-Legierungen oder die Ausbildung des Gehäuses der Gasgeneratorpatrone als Kunststoff-Druckgußteil scheiden aus.

Der Erfindung liegt die Aufgabe zugrunde, eine Einrichtung zur Befestigung einer Gasgeneratorpatrone in der Bohrung eines Gehäuseblocks anzugeben, die keine Veränderung der Form oder Abmessungen herkömmlicher Gasgeneratorpatronen erfordert und ohne Nietverbindung auskommt.

Diese Aufgabe wird bei einer Einrichtung der eingangs angegebenen Art erfindungsgemäß dadurch gelöst, daß eine das äußere Ende der Gasgeneratorpatrone umgreifende Hülse vorgesehen ist, die an ihrem ersten axialen Ende einen radial einwärts gerichteten Flansch aufweist, der die Stirnfläche der Gasgeneratorpatrone übergreift, und an ihrem entgegengesetzten axialen Ende radial auswärts gerichtete Leisten aufweist, die durch axiale Führungskanäle in der Bohrung eingebracht werden können und bei Drehung der Hülse in einem vorbestimmten Drehsinn in eine in Umfangsrichtung der Bohrung verlaufende Nut, in welche die Führungskanäle einmünden, eingreifen. Für die sichere Befestigung der Gasgeneratorpatrone im Gehäuseblock der Antriebseinheit ist nur ein einziges, kostengünstig herstellbares Teil erforderlich, nämlich eine Hülse, die über die in die Bohrung des Gehäuseblocks eingeschobene Gasgeneratorpatrone aufgestülpt und dann durch Drehung nach Art eines Bajonettverschlusses gesichert wird. Im Gegensatz zu dem herkömmlichen Nietverfahren besteht weitgehende Freiheit bei der Anordnung der Gasgeneratorpatrone im Gehäuseblock der Antriebseinheit, da weder eine hochbelastbare Abstützung des Gehäuseblocks, noch die Zuganglichkeit für einen Nietstempel erforderlich ist. Die erfindungsgemäße Befestigungseinrichtung eignet sich auch für eine automatische Montage mit abschließender Kontrolle.

Gemäß einer vorteilhaften Weiterbildung der Befestigungseinrichtung verläuft jede der Leisten an der Hülse entlang einer mit der Mantelfläche der Hülse koaxialen Schraubenlinie, und die Nut weist eine zur Achse der Bohrung senkrechte Anschlag auf, an der die Leisten angreifen und axial abgestützt sind. Durch die Steigung der Leisten ist eine Verklemmung der Hülse am Gehäuseblock gewährleistet. Eine Rückdrehung der verklemmten Hülse ist kaum möglich, da die Kanten der Leisten in die Haltefläche der Nut einschneiden, so daß sich Kerben bilden, die als Rastkanten wirken. Die Gasgeneratorpatrone ist daher wie bei einer Nietverbindung in der Bohrung des Gehäuseblocks gegen Demontage gesichert.

Zur Erleichterung der automatischen Montage ist gemäß einer vorteilhaften Weiterbildung der radial einwärts gerichtete Flansch der Hülse mit wenigstens zwei Öffnungen versehen, die in Richtung des vorbestimmten Drehsinns durch eine halbzylinderförmige Fläche und in der entgegengesetzten Richtung durch eine vom Boden der Öffnung ansteigende Rampenfläche begrenzt sind. In diese Öffnungen kann ein Montagewerkzeug mit zwei Stiften eingreifen. Bei der Drehbewegung im vorbestimmten Drehsinn kommen diese Stifte des Montagewerkzeugs an den halbzylinderförmigen Flächen in Anlage. Über das Montagewerkzeug kann ein hohes Drehmoment auf die Hülse übertragen werden. Im entgegengesetzten Drehsinn ist hingegen eine Drehmomentübertragung auf die Hülse nicht möglich, da die Stifte des Werkzeugs auf den ansteigenden Rampenflächen abgleiten. Die mißbräuchliche Demontage der Gasgeneratorpatrone wird auf diese Weise erheblich erschwert.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
- Fig. 1 eine auseinandergezogene Perspektivansicht eines Teils des Gehäuseblocks einer Antriebseinheit, einer Gasgeneratorpatrone und einer Hülse zur Festlegung derselben im Gehäuseblock;
- Fig. 2 eine analoge Perspektivansicht, welche die Teile im montierten Zustand darstellt;
- Fig. 3 einen axialen Schnitt durch die im Gehäuseblock festgelegte Gasgeneratorpatrone;
- Fig. 4 einen Schnitt entlang Linie IV-IV in Fig. 6;
- Fig. 5 eine Seitenansicht der in Fig. 4 gezeigten Hülse;
- Fig. 6 eine Draufsicht auf die Stirnfläche der in den Figuren 4 und 5 gezeigten Hülse; und
- Fig. 7 einen Schnitt entlang Linie VII-VII in Fig. 6.

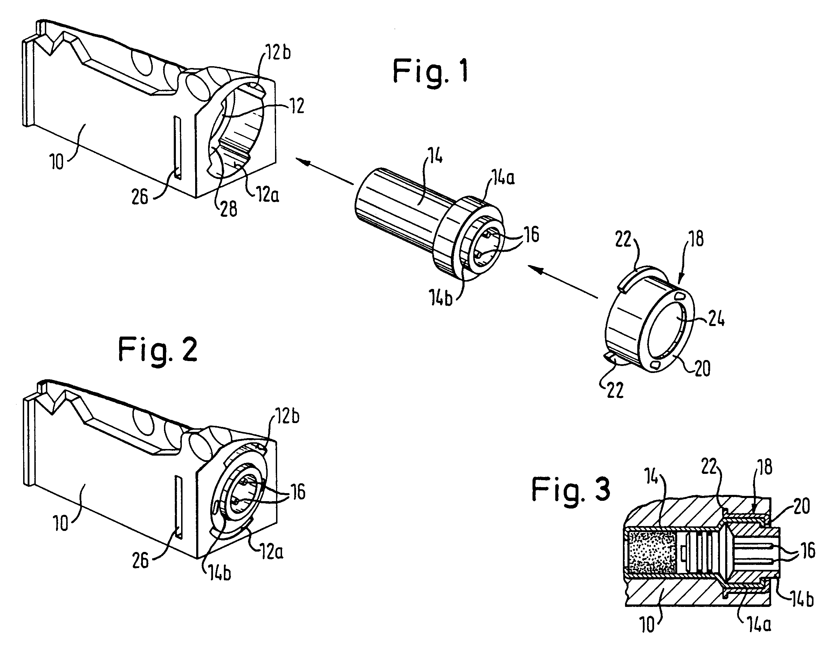

In den Figuren 1 und 2 ist bruchstückhaft ein Gehäuseblock 10 einer Gurtstraffer-Antriebseinheit eines Rückhaltesystems für Fahrzeuge gezeigt. In diesem Gehäuseblock 10 ist eine allgemein zylindrische Bohrung 12 ausgebildet, in die eine Gasgeneratorpatrone 14 passend eingesetzt werden kann. Die Gasgeneratorpatrone 14 ist an ihrem inneren Ende mit einem Berstboden versehen, der dem Ende eines im Inneren des Gehäuseblocks 10 ausgebildeten Gasführungskanals gegenüberliegt. In dem rohrförmigen Hauptabschnitt der Gasgeneratorpatrone 14 ist eine pyrotechnische Treibladung enthalten. An dem äußeren Ende der Gasgeneratorpatrone 14 ist ein Kopfstück 14a vergrößerten Durchmessers gebildet. Dieses Kopfstück 14a enthält einen elektrischen Zünder und elektrische Anschlußstifte 16 zum Aufstecken eines (nicht gezeigten) Anschlußsteckers. Eine zylindrische Hülse 18 ist an ihrem einen axialen Ende mit einem radial einwärts gerichteten Ringflansch 20 und an ihrem gegenüberliegenden Ende mit zwei einander diametral gegenüberliegend angeordneten Leisten 22 versehen, die radial auswärts gerichtet sind. Aus dem Kopfstück 14a ragt axial ein Sockel 14b hervor, der beim Überstülpen der Hülse 18 über das Kopfstück 14a der Gasgeneratorpatrone 14 in eine kreisrunde Öffnung 24 eingreift, welche der Ringflansch 20 umgibt. Die Leisten 22 der Hülse 18 werden beim Einführen der Hülse 18 in die Bohrung 12 durch axiale Kanäle 12a, 12b dieser Bohrung geführt. In ihrem dem Kopfstück 14a entsprechenden, äußeren Teil ist die Bohrung 12 auf einen Durchmesser erweitert, der dem Außendurchmesser des Kopfstücks 14a zuzüglich der doppelten Wandstärke der Hülse 18 entspricht. Durch einen seitlichen Einstich 26 in den Gehäuseblock ist eine umlaufende Nut 28 in die Wandung der Bohrung 12 eingebracht. Die Führungskanäle 12a, 12b münden in diese Nut 28 ein. Die stehengebliebenen Wandungsteile zwischen den Führungskanälen 12a, 12b bilden mit ihrem an die Nut 28 angrenzenden Ende eine zur Achse der Bohrung 12 senkrechte Anschlagfläche für die Leisten 22 der Hülse 18. Die Leisten 22 folgen jeweils einer mit der Mantelfläche der Hülse koaxialen Schraubenlinie von geringer Steigung.

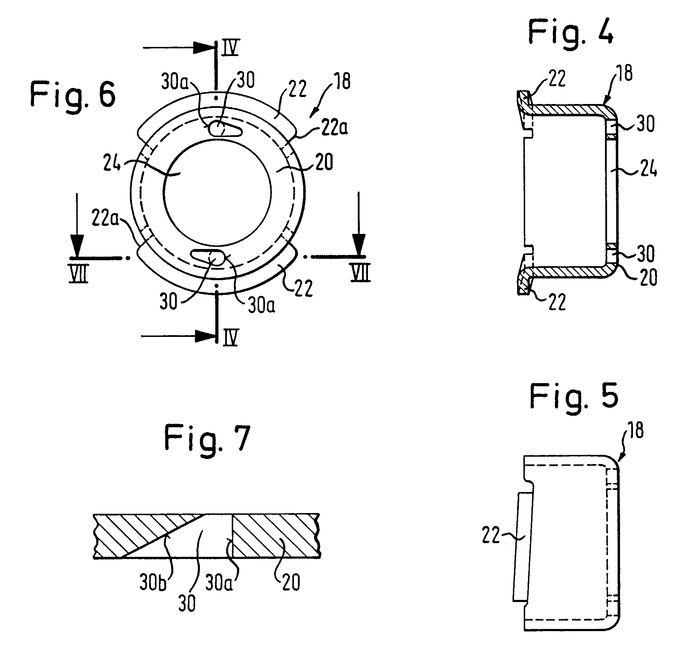

Bei der Montage wird die Gasgeneratorpatrone 14 in die Bohrung 12 eingesetzt, bis die durch den Übergang vom Hauptabschnitt zum Kopfstück 14a gebildete radiale Schulter an eine Stufe der Bohrung 12 anstößt, die den Übergang zur Nut 28 bildet. Dann wird die Hülse 18 über das Kopfstück 14a der Gasgeneratorpatrone 14 geschoben, wobei die Leisten 22 durch die Führungskanäle 12a, 12b eingeführt werden. Die Hülse 18 wird dann entgegen dem Uhrzeigersinn verdreht, wobei ihre Leisten 22 in die Nut 28 eingreifen und sich bei fortgesetzter Drehung mit zunehmender Kraft auf der Anschlagfläche abstützen, welche die Nut 28 zwischen den Führungskanälen 12a, 12b nach außen hin begrenzt. Aufgrund der Steigung der Leisten 22 stellt sich der höchste Wert der Abstützkräfte an den in Drehrichtung hinten liegenden Enden 22a der Leisten 22 ein (Fig. 6). Eine Rückdrehung der Hülse 18 ist nicht möglich, da die Kanten an den Enden 22a der Leisten 22 in die Anschlägfläche der Nut 28 einschneiden und eine Kerbe bilden, die als Rastkante wirkt.

Zur Vereinfachung der Montage ist die Hülse 18 mit Angriffsöffnungen 30 in ihrem Ringflansch 20 versehen. Diese Angriffsöffnungen 30 liegen einander diametral gegenüber und sind auf ihrer in Drehrichtung der Hülse 18 vorne liegenden Seite durch eine halbzylindrische Fläche 30a und auf ihrer gegenüberliegenden Seite durch eine zur Außenseite des Ringflansches 20 ansteigende Rampenfläche 30b begrenzt (Fig. 7). In diese Angriffsöffnungen 30 werden zwei zylindrische Stifte eines Montagewerkzeugs eingesetzt. Bei Drehung in dem vorbestimmten Drehsinn kommen die Stifte an der halbzylindrischen Fläche 30a zur Anlage, so daß ein Drehmoment auf die Hülse 18 übertragen wird. Bei Drehung in entgegengesetzter Richtung werden die Stifte hingegen von den ansteigenden Rampenflächen 30b abgewiesen, so daß eine Rückdrehung der Hülse 18 nicht möglich ist. Die Gasgeneratorpatrone 14 ist daher gegen mißbräuchliche Demontage gesichert.

Die Leisten 22 können an den Mantel der Hülse 18 angeformt sein, wie aus Fig. 4 ersichtlich, und erstrecken sich über einen Umfangswinkel von nahezu 90°. Die bei der Zündung der Gasgeneratorpatrone 14 auftretenden axialen Kräfte, denen die Hülse 18 standhalten muß, werden durch die Leisten 22 großflächig über die Anschlagflächen der Nut 28 auf den Gehäuseblock 10 übertragen. Die beschriebene Befestigung hält daher auch sehr hohen axialen Kräften bei der Zündung der Gasgeneratorpatrone 14 stand.

## Patentansprüche

1. Einrichtung zur Befestigung einer allgemein zylindrischen Gasgeneratorpatrone (14) in einer Gurtstraffer-Antriebseinheit eines Rückhaltesystems für Fahrzeuge, wobei die Gasgeneratorpatrone (14) in eine Bohrung (12) in einem Gehäuseblock (10) der Antriebseinheit eingeschoben und in dieser festgelegt wird und wobei die Gasgeneratorpatrone (14) an ihrem dem Boden der Bohrung zugewandten inneren Ende einen Gasauslaß aufweist und an ihrem gegenüberliegenden äußeren Ende mit einem Zünder versehen ist, dadurch gekennzeichnet, daß eine das äußere Ende der Gasgeneratorpatrone (14) umgreifende Hülse (18) vorgesehen ist, die an ihrem ersten axialen Ende einen radial einwärts gerichteten Flansch (20) aufweist, der die Stirnfläche der Gasgeneratorpatrone (14) übergreift, und an ihrem entgegengesetzten axialen Ende radial auswärts gerichtete Leisten (22) aufweist, die durch axiale Führungskanäle (12a, 12b) in der Bohrung (12) eingebracht werden können und bei Drehung der Hülse (18) in einem vorbestimmten Drehsinn in eine in Umfangsrichtung der Bohrung verlaufende Nut (28), in welche die Führungskanäle (12a, 12b) einmünden, eingreifen.

2. Einrichtung nach Anspruch 1, dadurch gekennzeichnet, daß jede der Leisten (22) entlang einer mit der Mantelfläche der Hülse koaxialen Schraubenlinie verläuft und die Nut (28) eine zur Achse der Bohrung (12) senkrechte Anschlagfläche aufweist, an der die Leisten (22) angreifen und axial abgestützt sind.

3. Einrichtung nach Anspruch 1 oder 2, dadurch gekennzeichnet, daß der radial einwärts gerichtete Flansch (20) wenigstens zwei Öffnungen (30) aufweist, die in Richtung des vorbestimmten Drehsinns durch eine halbzylinderförmige Fläche (30a) und in der entgegengesetzten Richtung durch eine vom Boden der Öffnung ansteigende Rampenfläche (30b) begrenzt sind.

## Claims

1. An apparatus for securing a generally cylindrical gas generator cartridge (14) in a belt tensioner drive unit of a vehicular restraining system, said gas generator cartridge (14) being inserted in a bore (12) in a housing block (10) of the drive unit and secured therein and said gas generator cartridge (14) being provided with a gas outlet at its inner end facing the bottom of the bore and with an igniter at its opposite outer end, characterized in that around the outer end of the gas generator cartridge (14) a sleeve (18) is provided which features at its first axial end a radially inwardly oriented flange (20) surrounding the end surface of the gas generator cartridge (14) and which is provided at its opposite axial end with lands (22) oriented radially outwardly which can be inserted into the bore (12) by axial guide channels (12a, 12b) and upon rotation of the sleeve (18) in a prescribed sense of rotation engage in a groove (28) provided circumferentially in the bore, said guide channels (12a, 12b) merging in said groove (28).

2. An apparatus as set forth in claim 1, characterized in that each of said lands (22) describes a helix coaxial to the envelope surface of said sleeve, and that said groove (28) features, perpendicular to the axis of said bore (12), an abutment surface engaging said lands (22) and providing axial support therefor.

3. An apparatus as set forth in claim 1 or 2, characterized in that said radially inwardly oriented flange (20) is provided with at least two openings (30) which are defined in the direction of the prescribed sense of rotation by a semi-cylindrically shaped surface (30a) and in the opposite direction by a ramp surface (30b) sloping upwards from the bottom of the opening.

## Revendications

1. Dispositif de fixation d'une cartouche génératrice de gaz (14), qui est sensiblement cylindrique, dans une unité d'entraînement de tendeur de ceinture d'un système de retenue pour véhicules, la cartouche génératrice de gaz (14) étant enfilée dans un alésage (12) d'un bloc de boîtier (10) de l'unité d'entraînement et y étant fixée et la cartouche génératrice de gaz (14) comportant à son extrémité intérieure tournée vers le fond de l'alésage une sortie de gaz et étant équipée à son extrémité extérieure opposée d'une amorce, caractérisé en ce qu'une douille (18) enveloppant l'extrémité extérieure de la cartouche génératrice de gaz (14) est prévue et comporte à sa première extrémité axiale une bride (20) orientée radialement vers l'intérieur et chevauchant la surface extrême de la cartouche génératrice de gaz (14) et, à son extrémité axiale opposée, des nervures (22) orientées radialement vers l'extérieur, qui peuvent être introduites dans l'alésage (12) par des canaux axiaux de guidage (12a, 12b) et pénétrer, lors d'une rotation de la douille (18) dans un sens prédéterminé, dans une rainure (28) orientée dans la direction de la circonférence de l'alésage et dans laquelle les canaux de guidage (12a, 12b) débouchent.

2. Dispositif selon la revendication 1, caractérisé en ce que chacune des nervures (22) suit une ligne hélicoïdale qui est coaxiale à la surface de l'enveloppe de la douille et la rainure (28) comporte une surface de butée qui est perpendiculaire à l'axe de l'alésage (12), que les nervures (22) attaquent et contre laquelle elles prennent appui axialement.

3. Dispositif selon la revendication 1 ou 2, caractérisé en ce que la bride orientée radialement vers l'intérieur (20) comporte au moins deux trous (30) qui sont délimités dans la direction du sens prédéterminé de rotation par une surface semi-cylindrique (30a) et, dans la direction opposée, par une surface en rampe (30b) qui est ascendante à partir du fond du trou.
